# EUROPEAN PATENT APPLICATION

(11) **EP 3 473 473 A1**
(43) Date of publication of application: **24.04.2019**
(21) Application number: 17198472.7
(22) Date of filing: 26.10.2017
(51) Int. Cl.: B60K 17/08, B60K 17/02, B60K 17/16, B60K 17/35

(54) **POWER TRAIN SYSTEM AND VEHICLE INCLUDING THE SAME**

(30) Priority: 20.10.2017 KR 20170136870
(71) Applicant: Han, Seung Woo, Incheon 21982 (KR)
(72) Inventor: Han, Seung Woo, Incheon 21982 (KR)
(74) Representative: Vossius & Partner Patentanwälte Rechtsanwälte mbB

(57) **Abstract**

There are provided a power train system and a vehicle including the same. The power train system may include: an axle output unit including an axle shaft connected to wheels; a bevel gear part forming a bevel gear rotating shaft installed in a longitudinal direction of a vehicle body so as to supply a power generated by a power generator to the axle output unit; and an axle input unit including an input driving shaft which is separated from the axle shaft of the axle output unit, receives the power from the bevel gear part, and transfers the received power to the axle output unit. The axle input unit may be fixed at a predetermined position in the circumferential direction of the axle shaft, while a connection angle formed by the axial centers of the input driving shaft and the bevel gear rotating shaft of the bevel gear part is fixed. The power train system can not only improve a degree of freedom in design, but also achieve multiple speeds.

## Description

### CROSS-REFERENCE TO RELATED APPLICATION(S)

This application claims benefit of priority to Korean Patent Application No. 10-2017-0136870 filed on October 20, 2017 in the Korean Intellectual Property Office, the disclosure of which is incorporated herein by reference in its entirety.

### BACKGROUND

### 1. FIELD

The present disclosure relates to a power train system and a vehicle including the same.

### 2. DESCRIPTION OF RELATED ART

As is generally known, a power train system of a vehicle includes a power generator for generating a driving power, a power converter for converting the torque and speed of the driving power generated by the power generator, and a power transfer unit for transferring the driving power, of which the output torque and speed are converted by the power converter, to a plurality of wheels.

The power generator may be installed in an internal combustion engine based on the combustion of fossil fuel, a motor engine based on the supply of electric force, a hybrid engine having an internal combustion engine and motor engine combined therein, and other types of motors.

The power converter generally includes a torque converter for converts the torque of a driving power outputted from the power generator and a transmission for changing a rotation speed.

The power transfer unit includes a differential gear and an axle shaft. The differential gear receives the driving power of which the output torque and speed are converted by the power converter, and the axle shaft transfers the driving power distributed by the differential gear to left and right wheels.

In general, a clutch system is further installed between the power generator and the power converter. Theoretically, the clutch system may be installed between the power generator and the power converter as described above, installed between the power converter and the power transfer unit, or installed between the power transfer unit and the left and right wheels which finally receive the driving power.

The clutch system may be disposed between parts which transfer and receive a driving power, in order to temporally block a transfer of the driving power. Therefore, the clutch system allows a vehicle to smoothly repeat stopping and running, without stopping the power generator.

In the case of a commercial vehicle, the clutch system may be installed to interrupt power between the power generator and the power converter, in order to minimize the consumption of energy generated by the power generator.

However, the position of the clutch system does not need to be limited. In many cases, the position of the clutch system may be changed depending on the types and features of vehicles to which the clutch system is applied. That is, a commercial vehicle and a heavy equipment vehicle used for a special operation are different from each other in terms of a required torque and required driving speed. Therefore, since each of the vehicles has significantly different driving efficiency and operation efficiency depending on the characteristics thereof, the structures of the power generator, the power converter and the power transfer unit need to be changed and designed according to the characteristics of each vehicle.

Depending on the characteristics of each vehicle, the design change of the power generator, the power converter and the power transfer unit is conducted in a different manner. Therefore, the power generator, the power converter and the power transfer unit are inevitably designed by a plurality of manufacturers, which makes it difficult to design an integration structure.

Furthermore, since the driving power outputted from the power converter must be distributed and transferred to the left and right wheels, the driving power is transferred through a bevel gear connected to the differential gear connecting left and right axle shafts.

More specifically, the bevel gear has a rotating shaft (hereafter, referred to as 'bevel gear rotating shaft') which is horizontally installed in the longitudinal direction of a vehicle body, and the left and right axle shafts are horizontally installed in the side-to-side direction.

At this time, since the bevel gear must be engaged so as not to significantly deviate from the central axis of a beveling gear installed on the differential gear, the design of the bevel gear rotating shaft for the axle shafts is considerably limited. In other words, since the bevel gear rotating shaft and the beveling gear are engaged to switch the direction of a driving power to a substantially orthogonal direction, a general spur gear engagement is unstable, and a spiral gear engagement is established. Therefore, the bevel gear rotating shaft and the rotating shaft of the beveling gear must be designed to be positioned at substantially the same height. When the bevel gear rotating shaft and the rotating shaft of the beveling gear are designed to have a predetermined height difference therebetween, the slopes of the tooth profiles of the bevel gear and the beveling gear must be increased. However, there is a limitation in increasing the slopes of the tooth profiles of the bevel gear and the beveling gear.

As long as the bevel gear is installed at the leading end of a propeller shaft including a universal joint coupling, the design of the vertical height difference between the bevel gear and the axle shaft has a tolerance to some extent. However, since the original function of the propeller shaft is to absorb a vertical height difference caused by a suspension system, it is not easy to secure a degree of freedom in design beyond the function.

### SUMMARY

An object of the present disclosure is to provide a power train system which is capable of improving the entire degree of freedom in design for a power transfer structure, and a vehicle including the same.

An object of the present disclosure is to provide a power train system which is capable of distributing a concentrated load of an axle shaft, thereby reducing the size of a product, and a vehicle including the same.

An object of the present disclosure is to provide a power train system which is capable of reducing a manufacturing cost, and a vehicle including the same.

According to an embodiment of the present disclosure, a power train system may include: an axle output unit including an axle shaft connected to wheels; a bevel gear part forming a bevel gear rotating shaft installed in a longitudinal direction of a vehicle body so as to supply a power generated by a power generator to the axle output unit; and an axle input unit including an input driving shaft which is separated from the axle shaft of the axle output unit, receives the power from the bevel gear part, and transfers the received power to the axle output unit. The axle input unit may be fixed at a predetermined position in the circumferential direction of the axle shaft, while a connection angle formed by the axial centers of the input driving shaft and the bevel gear rotating shaft of the bevel gear part is fixed.

The axle input unit may include: a beveling gear installed on the input driving shaft, and engaged with a bevel gear of the bevel gear part so as to receive the power; and forward and reverse clutch parts installed on the outer circumference of the input driving shaft, and fixed to the input driving shaft depending on whether operation oil is supplied.

The power train system may further include an idler part separated from the axle shaft, disposed in parallel to the input driving shaft, connected to any one of the forward and reverse clutch parts to switch a rotational power of the input driving shaft from one direction to the other direction, and transferring the switched rotational power to the axle output unit.

The forward and reverse clutch parts may include: a reverse clutch part including a reverse drive gear directly connected to the axle output unit, and rotating the reverse drive gear when being connected to the input driving shaft; and a forward clutch part including a forward drive gear indirectly connected to the axle output unit through the idler part, and rotating the forward drive gear and the idler part when being fixed to the input driving shaft.

The idler part may include: an idler shaft installed in parallel to the axle shaft and the input driving shaft; and an idle gear installed on the outer circumference of the idle shaft, and engaged with the forward drive gear of the forward clutch part.

The axle input unit may be fixed at a predetermined position in a semicircle range corresponding to a side where the axle input unit is installed, based on an arbitrary vertical line passing through the axial center of the input driving shaft.

The axle shaft may include a left axle shaft connected to a left wheel of the wheels and a right axle shaft connected to a right wheel of the wheels, the axle output unit may include left and right differential transfer gears disposed between the left and right axle shafts, and connected to the axle input unit so as to separately receive a forward driving power and a reverse driving power from the axle input unit, and the axle input unit may be fixed at a predetermined position in a semicircle range corresponding to a side where the axle input unit is installed, based on an arbitrary vertical line passing through the axial centers of the left and right differential transfer gears.

The axle shaft may include a left axle shaft connected to a left wheel of the wheels and a right axle shaft connected to a right wheel of the wheels, the axle output unit may include left and right differential transfer gears disposed between the left and right axle shafts, and connected to the axle input unit so as to selectively receive a forward driving power and a reverse driving power from the axle input unit, and the reverse drive gear of the axle input unit may be engaged with a predetermined position in a semicircle range corresponding to a side where the axle input unit is installed, based on an arbitrary vertical line passing through the axial center of any one of the left and right differential transfer gears, while one side of the idler part is connected to the forward drive gear and the other side of the idler part is connected to the other of the left and right differential transfer gears.

The axle shaft may include a left axle shaft connected to a left wheel of the wheels and a right axle shaft connected to a right wheel of the wheels, the axle output unit may include left and right differential transfer gears disposed between the left and right axle shafts, and connected to the axle input unit so as to separately receive a forward driving power and a reverse driving power from the axle input unit, and the reverse drive gear of the axle input unit may be engaged with a predetermined position in a semicircle range corresponding to a side where the axle input unit is installed, based on an arbitrary vertical line passing through the axial center of any one of the left and right differential transfer gears, while one side of the idle gear is engaged with the forward drive gear and the other side of the idle gear is engaged with the other of the left and right differential transfer gears.

According to another embodiment of the present disclosure, there is provided a vehicle including a power train system. The power train system include: an axle output unit including an axle shaft connected to wheels; a bevel gear part forming a bevel gear rotating shaft installed in a longitudinal direction of a vehicle body so as to supply a power generated by a power generator to the axle output unit; and an axle input unit including an input driving shaft which is separated from the axle shaft of the axle output unit, receives the power from the bevel gear part, and transfers the received power to the axle output unit. The axle input unit may be fixed at a predetermined position in the circumferential direction of the axle shaft, while a connection angle formed by the axial centers of the input driving shaft and the bevel gear rotating shaft of the bevel gear part is fixed.

### BRIEF DESCRIPTION OF DRAWINGS

FIG. 1 is a schematic diagram illustrating a power train system and a vehicle including the same according to an embodiment of the present disclosure.
FIG. 2 is a perspective view illustrating an example of a second transmission unit among components of the power train system and the vehicle including the same according to the embodiment of the present disclosure.
FIG. 3 is a front view of FIG. 2.
FIG. 4 is a cross-sectional view taken along the line A-A of FIG. 3.
FIG. 5 is a cross-sectional view taken along the line B-B of FIG. 3.
FIG. 6 is a cross-sectional view taken along the line C-C of FIG. 5.
FIG. 7 is a cross-sectional view taken along the line D-D of FIG. 5.
FIGS. 8A to 8D are side views illustrating operation effects of the power train system and the vehicle including the same through the second transmission unit.
FIGS. 9A and 9C illustrates power transfer processes during a neutral mode, a forward drive mode and a reverse drive mode through the second transmission unit according to the example of FIG. 2.

### DETAILED DESCRIPTION

Hereafter, a power train system, a vehicle including the same and a control method thereof according to embodiments of the present disclosure will be described in detail with reference to the accompanying drawings.

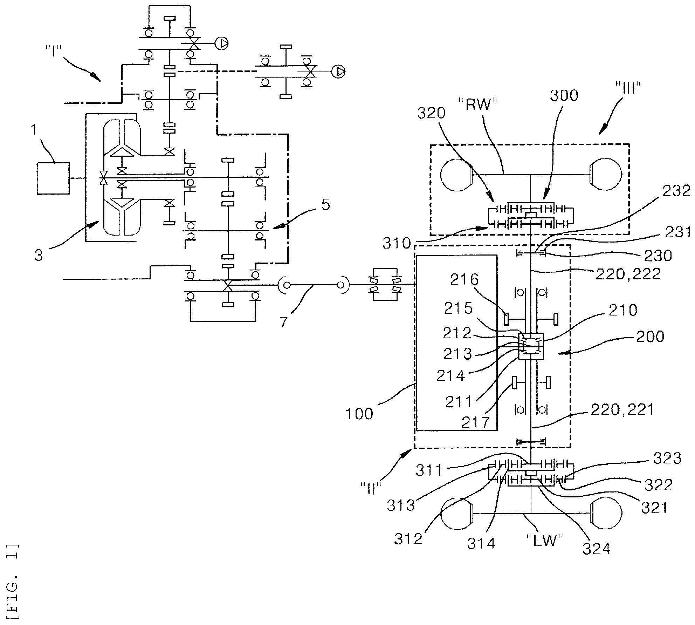

FIG. 1 is a schematic diagram illustrating a power train system and a vehicle including the same according to an embodiment of the present disclosure.

The power train system according to the embodiment of the present disclosure is applied to a vehicle. The vehicle includes all kinds of means of transportation which can be driven by a driving power generated through a driving source (power generator 1) such as an engine. For example, the vehicle may include a truck, van, sports-utility vehicle and heavy equipment vehicle as well as a general car.

FIG. 1 illustrates a rear-wheel-drive power train system, but the power train system according to the present embodiment may also include a front-wheel-drive power train system without departing the scope of the invention.

The driving source (power generator 1) which provides a driving power to be transferred through the power train system may include a conventional internal combustion engine, a motor engine M, a hybrid engine and other types of motors.

The power train system and the vehicle including the same according to the present embodiment relate to a power train system which receives power generated by a power generator 1, converts the torque of the received power through a torque converter 3, and transfers the torque-converted power to left and right wheels LW and RW through a bevel gear (with no reference numeral) installed at the leading end of a propeller shaft 7.

In general, a power generator is defined as a driving source to generate power, and a power converter refers to a part for converting the rotation speed or output torque of the generated power. In the power train system according to the present embodiment, however, the entire structure between the power generator 1 and the propeller shaft 7 is defined as 'first transmission unit I', and the entire structure between the propeller shaft 7 and a wheel driving unit III described later is defined as 'second transmission unit II', for convenience of description.

Although not illustrated, the first transmission unit I may be installed in a transmission housing and mounted on a vehicle body, and the second transmission unit II and the wheel driving unit III may be installed in an axle housing distinguished from the transmission housing, and integrated with the vehicle body.

As illustrated in FIG. 1, the power train system and the vehicle including the same according to the present embodiment may include an axle input unit 100 and an axle output unit 200. The axle input unit 100 may be connected to a bevel gear part forming a bevel gear rotating shaft installed in the longitudinal direction of the vehicle body so as to receive a driving power of the first transmission unit I, and selectively switch the received driving power to any one of a forward driving power and reverse driving power or change the received driving power through multiple speeds, and the axle output unit 200 may receive the driving power outputted from the axle input unit 100, and output the received driving power to the wheel driving units III connected to the left and right wheels LW and RW. The detailed structure of the axle input unit 100 will be described in detail later.

The axle output unit 200 serves to receive any one of the forward driving power and the reverse driving power from the axle input unit 100 or any one of the driving powers changed through multiple speeds, and transfer the received driving power to the wheel driving units III through a differential gear part 210.

Therefore, the axle output unit 200 may include the differential gear part 210, left and right axle shafts 221 and 222 extended from the differential gear part 210 to the left and right wheels LW and RW, and a brake part 230.

The differential gear part 210 may include a differential gear case part 211 and 212 formed by left and right differential gear cases 211 and 212 coupled to each other, differential pinion gears 218 having a pinion shaft 213 set to a rotating shaft thereof, the pinion shaft 213 being coupled to the differential gear case part 211 and 212, and differential side gears 214 and 215 which are engaged with the differential pinion gears 218 and finally connected to the axle shaft 220.

The left and right differential gear cases 211 and 212 may have left and right differential transfer gears 217 and 216 installed on the outer circumferential surfaces thereof, respectively, the left and right differential transfer gears 217 and 216 being formed in the shape of a spur gear.

The inner circumferential surface of the left differential gear case 211 forming the inside of the differential gear case part 211 and 212 is engaged with the outer surface of the left differential side gear 214 which is coupled to the leading end of the left axle shaft 221 inserted into the differential gear case part 211 and 212 through spline gear coupling.

The inner circumferential surface of the right differential gear case 212 forming the inside of the differential gear case part 211 and 212 is engaged with the outer surface of the right differential side gear 215 which is coupled to the leading end of the right axle shaft 222 inserted into the differential gear case part 211 and 212 through spline gear coupling.

The pinion shaft 213 of the differential pinion gears 218 is disposed perpendicular to the left and right axle shafts 221 and 222, and the differential pinion gears 218 installed at both ends of the pinion shaft 213 are engaged with the inner surfaces of the left and right differential side gears 214 and 215, respectively.

The power outputted by the differential gear part 210 may be transferred to the wheel driving units III formed at the left and right wheels LW and RW.

The wheel driving units III may include a left wheel driving unit III connected to the left wheel LW and a right wheel driving unit III connected to the right wheel RW. The power transferred from the differential gear part 210 rotates the left and right wheel driving units III in the same manner. Therefore, in the following descriptions, the left and right wheel driving units are not distinguished by the terms 'left' and 'right', but only the components of 'the wheel driving unit III' will be described in detail, for convenience of description.

The wheel driving unit III may include a brake part 230. At this time, any one of a dry brake and wet brake may be employed as the brake part 230, depending on a designer's selection. The present embodiment is based on the supposition that a wet brake is installed as the brake part.

As illustrated in FIG. 1, the wet brake part 230 may be disposed between the differential gear part 210 and the leading end of the left axle shaft 221 or between the differential gear part 210 and the leading end of the right axle shaft 222.

The wet brake part 230 may include a brake piston (not illustrated), a brake disk 232 and a pad 231. The brake piston may brake the axle shaft 220, and the brake disk 232 and the pad 231 may rub against each other through the brake piston. When the brake disk 232 and the pad 231 are pressed against each other, the axle shaft 220 and a sun gear 311 of a reduction gear part 300 integrated with the axle shaft 220 may be braked.

The reduction gear part 300 is installed at each of the leading ends of the left and right axle shafts 221 and 222.

In the power train system and the vehicle including the same according to the present embodiment, the reduction gear part 300 may be implemented with a double planetary gear set. That is, the double planetary gear set may include a first planetary gear set 310 disposed adjacent to the axle shaft 220 and a second planetary gear set 320 disposed adjacent to the left or right wheel LW or RW.

As illustrated in FIG. 1, the first planetary gear set 310 may include a first sun gear 311, a plurality of planetary gears 312, a first ring gear 313, and a first carrier 314. The first sun gear 311 is integrated with the leading end of the axle shaft 220, the plurality of planetary gears 312 are engaged with the first sun gear 311 and revolved and rotated according to a rotation operation of the first sun gear 311, the first ring gear 313 is fixed in the axle housing (with no reference numeral) so as to surround the plurality of first planetary gears 312, and has an inner circumferential surface engaged with the plurality of first planetary gears 312 at the same time, and the first carrier 314 is connected to the rotation centers of the plurality of first planetary gears 312, and rotated in the revolution direction of the plurality of first planetary gears 312.

The second planetary gear set 322 may include a second sun gear 321, a plurality of second planetary gears 322, a second ring gear 323, and a second carrier 324. The second sun gear 321 is coaxially connected to a rotating shaft of the first carrier 314, the plurality of planetary gears 322 are engaged with the second sun gear 321, and revolved and rotated according to a rotation operation of the second sun gear 321, the second ring gear 323 is fixed in the axle housing so as to surround the second planetary gears 322, and has an inner circumferential surface engaged with the plurality of second planetary gears 322 at the same time, and the second carrier 324 is connected to the rotation centers of the plurality of second planetary gears 322 and rotated in the revolution direction of the plurality of second planetary gears 322.

The second carrier 324 is connected to the left and right wheels LW and RW, and finally transfers a reduced rotational power to the left and right wheels LW and RW.

As such, the power train system and the vehicle including the same according to the present embodiment may include the reduction gear parts 300 which are installed between the leading ends of the left and right axle shafts 220 and the left and right wheels, respectively, and implemented with a double planetary gear set. Thus, the whole load of the axle output unit 220 connected to the differential gear part 210 and the left and right axle shafts 221 and 222 can be distributed.

The whole length and width of a heavy equipment vehicle such as a forklift truck is shorter than those of a commercial vehicle. Thus, the heavy equipment vehicle has a design issue that most components such as a power generator, power converter and power transfer unit are inevitably concentrated in the middle of the vehicle body under the driver's seat. Furthermore, since a transmission assembly of the heavy equipment vehicle includes a plurality of components coupled to one shaft of the axle shaft 220 composed of the left and right axle shafts 220, the entire volume of the heavy equipment vehicle is increased. The increase of the volume may raise the manufacturing cost of the transmission housing that supports the load of the transmission assembly while forming the exterior of the transmission assembly. Moreover, individual components constituting the power converter and the power transfer unit are implemented with a number of gear assemblies. Since such a structure requires a process of manufacturing delicate gears, the manufacturing cost is inevitably increased.

The power train system and the vehicle including the same according to the present embodiment are designed in such a manner that the reduction gear part 300 which increases an output torque while reducing a transferred driving power is positioned at the outer end of the axle shaft 220 instead of the central portion of the axle shaft, and includes a double planetary gear set for accomplishing a high-torque output. Thus, the axle input unit 100 can be separated from the axle output unit 200 of which the load may be concentrated on the axle shaft 220, which makes it possible to not only distribute the whole load of the axle output unit 200, but also remove the existing torque converter 3.

Hereafter, various embodiments which can be implemented by changing the position and structure design of the reduction gear part 300 will be described in detail.

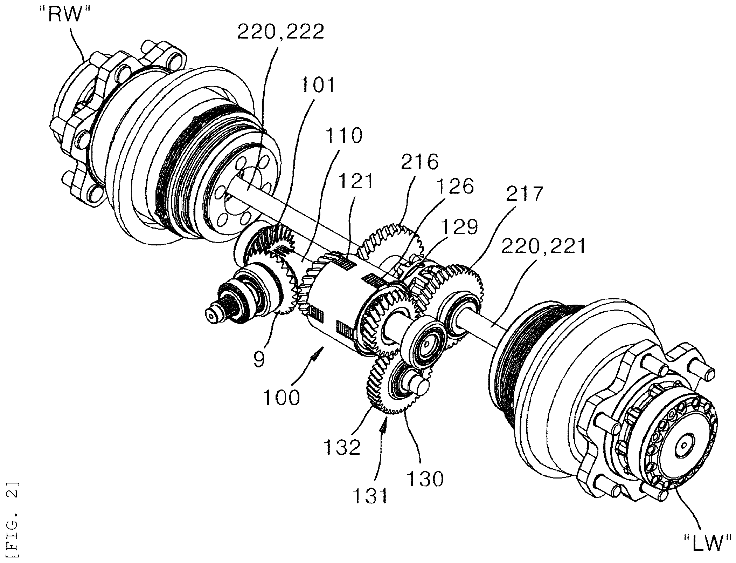

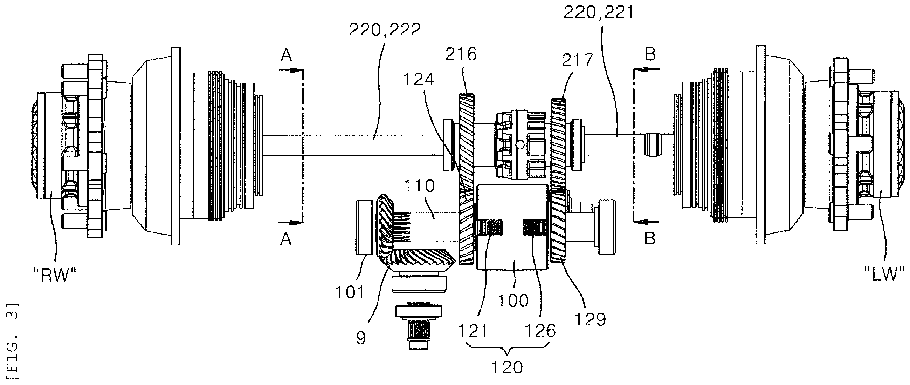

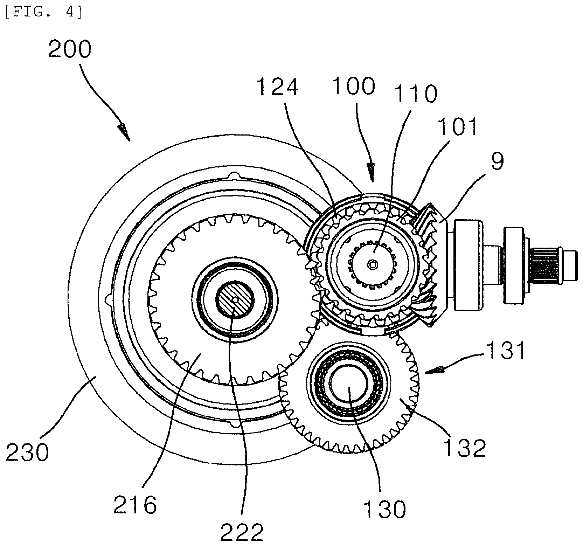

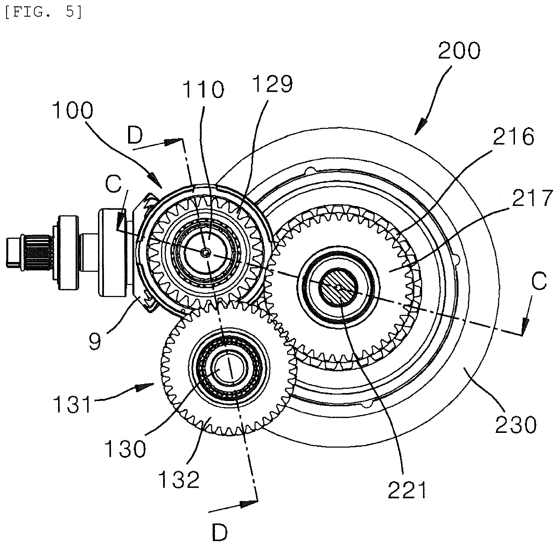

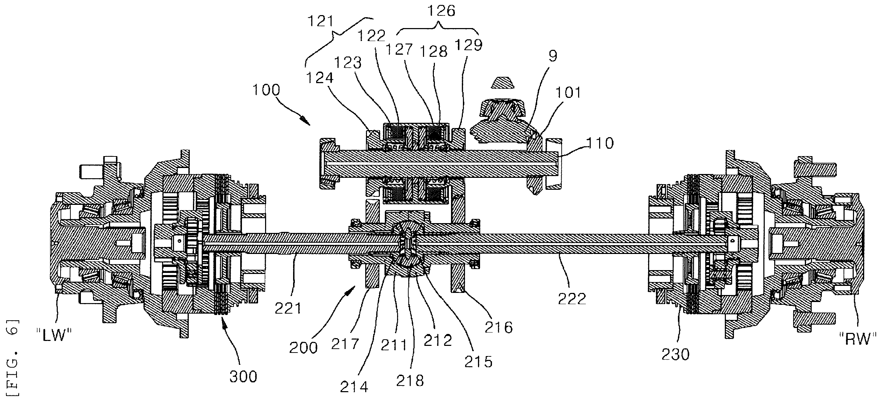

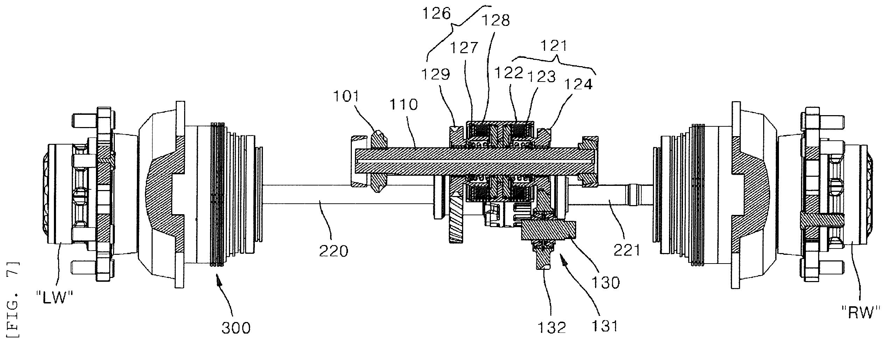

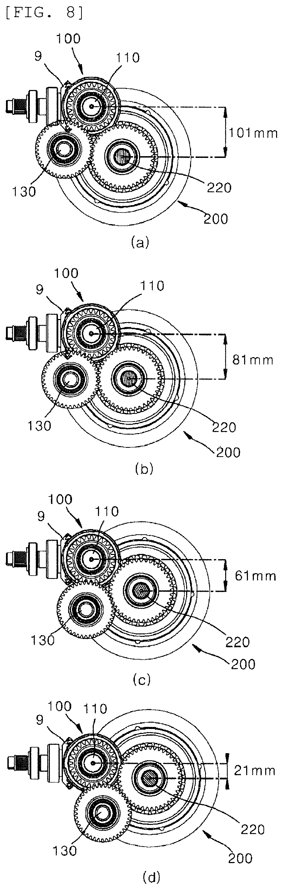

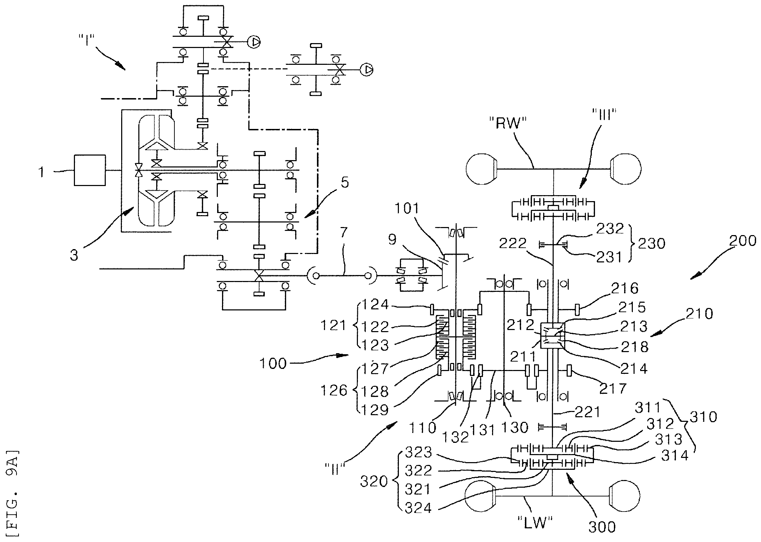

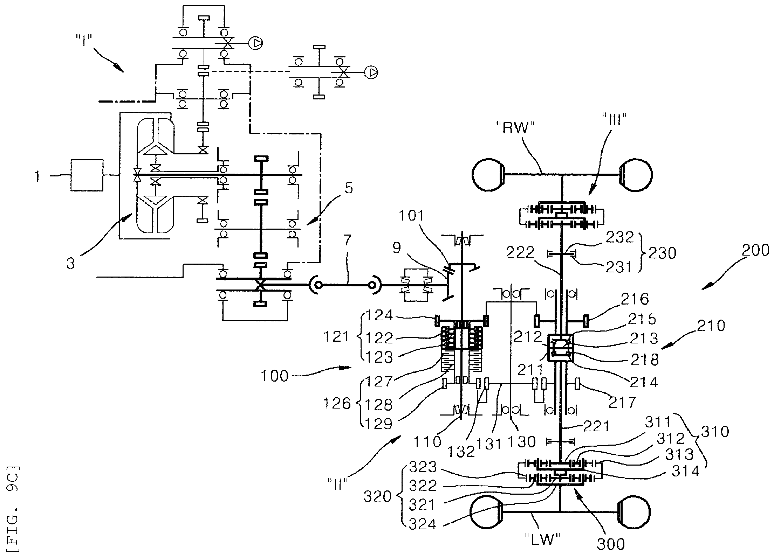

FIG. 2 is a perspective view illustrating an example of the second transmission unit II among the components of the power train system and the vehicle including the same according to the embodiment of the present disclosure, FIG. 3 is a front view of FIG. 2, FIG. 4 is a cross-sectional view taken along the line A-A of FIG. 3, FIG. 5 is a cross-sectional view taken along the line B-B of FIG. 3, FIG. 6 is a cross-sectional view taken along the line C-C of FIG. 5, FIG. 7 is a cross-sectional view taken along the line D-D of FIG. 5, FIGS. 8A to 8D are side views illustrating an operation effect of the power train system through the second transmission unit II, and FIGS. 9A and 9C illustrates power transfer processes during a neutral mode, a forward drive mode and a reverse drive mode through the second transmission unit II according to the example of FIG. 2.

Among the components of the power train system and the vehicle including the same according to the present embodiment, the second transmission unit II receives a driving power of the first transmission unit I through the bevel gear 9 of the bevel gear part installed at the leading end of the propeller shaft 7, as illustrated in FIGS. 2 to 8.

The bevel gear part and the axle input unit 100 are connected perpendicular to each other through the bevel gear 9, and the axle input unit 100 and the axle output unit 200 are disposed in parallel to each other with an idler part 131 disposed therebetween, and spaced a predetermined distance from each other.

As illustrated in FIGS. 2 to 8, the second transmission unit II may further include the idler part 131 which is installed between the axle input unit 100 and the axle output unit 200, and rotated only when power inputted by the axle input unit 100 is any one of a forward driving power and reverse driving power, but not rotated when the power inputted by the axle input unit 100 is a different driving power.

The first transmission unit I may further include a torque converter 3 which converts the torque of a rotational power, before inputting the rotational power to the axle input unit 100 of the second transmission unit II. The torque converter 3 includes a torque converter clutch to control an output shaft of the power generator 1 and an input shaft of the first transmission unit I, which have no reference numerals.

The driving torque outputted by the torque converter 3 is transferred to the axle input unit 100 of the second transmission unit II through the propeller shaft 7 having the bevel gear 9 installed at the leading end thereof. As is publicly known, the propeller shaft 7 is rotated through a universal joint coupling between one end and the other end thereof, and performs an addition function of absorbing a height change of the vehicle body by a suspension system (not illustrated).

The axle input unit 100 is separated from the axle shaft 220 of the axle output unit 200, receives power from the bevel gear part through an input driving shaft 110 described later, and transfers the received power to the axle output unit 200. More specifically, the axle input unit 100 includes the input driving shaft 110, a beveling gear 101, and a forward/reverse clutch part 121 and 126. The input driving shaft 110 is disposed perpendicular to the bevel gear rotating shaft corresponding to the rotation center of the bevel gear 9, the beveling gear 101 is formed on the outer circumferential surface of the input driving shaft 110, and the forward/reverse clutch part 121 and 126 is disposed on the outer circumference of the input driving shaft 110, and selectively switches a driving power to a forward driving power or reverse driving power, depending on whether operation oil is supplied.

The input driving shaft 110 includes a forward drive gear 129 and reverse drive gear 124 installed on the outer circumferential surface thereof. The forward drive gear 129 and the reverse drive gear 124 are installed at one side and the other side of the input driving shaft 110 with forward/reverse clutch part 121 and 126 interposed therebetween, and selectively rotated with the input driving shaft 110 according to an operation of the forward/reverse clutch part 121 and 126.

The forward/reverse clutch part 121 and 126 includes a forward clutch part 121 and a reverse clutch part 126. The forward clutch part 121 is disposed at the forward drive gear 129, and fixes the input driving shaft 110 to the forward drive gear 129 depending on whether operation oil is supplied, and the reverse clutch part 126 is disposed at the reverse drive gear 124, and fixes the input driving shaft 110 to the reverse drive gear 124 depending on whether operation oil is supplied.

In other words, when operation oil is supplied to the forward clutch part 121 through a flow path, friction members of the forward clutch part 121 are pressed against each other to fix the input driving shaft 110 to the forward drive gear 129. Then, when the input driving shaft 110 is rotated, the forward drive gear 129 is rotated while the reverse drive gear 124 is stopped. The friction members may include a friction plate and friction disk which will be described later.

On the other hand, when operation oil is supplied to the reverse clutch part 126 through a flow path, friction members of the reverse clutch part 126 are pressed against each other to fix the input driving shaft 110 to the reverse drive gear 124. Then, when the input driving shaft 110 is rotated, the reverse drive gear 124 is rotated to output only a reverse driving power, while the forward drive gear 129 is stopped. The friction members of the reverse clutch part 126 include a friction plate and friction disk which will be described later.

More specifically, the forward clutch part 121 may include a hollow forward clutch drum (not illustrated), a ring-shaped forward piston (not illustrated), one or more ring-shaped friction plates 122, a forward coupling and one or more ring-shaped friction disks 123. The hollow forward clutch drum has a cylinder installed at one side of the inside thereof, the ring-shaped forward piston is installed in the cylinder while being supported by a spring, and moved in the longitudinal direction of the input driving shaft 110 by hydraulic pressure when operation oil is supplied, the one or more ring-shaped friction plates 122 are coupled to the inner circumferential surface of the forward clutch drum at the other side of the inside of the forward clutch drum so as to be spaced from each other, the forward coupling is coupled to the input driving shaft 110 and extended into the forward clutch drum, and the one or more ring-shaped friction disks 123 are coupled to the outer circumferential surface of the forward coupling, such that the friction plates 122 and the friction disks 123 are alternately arranged while both side surfaces thereof are maintained at a predetermined distance.

Similarly, the reverse clutch part 126 may include a hollow reverse clutch drum (not illustrated), a ring-shaped reverse piston (not illustrated), one or more ring-shaped friction plates 127, a reverse coupling and one or more ring-shaped friction disks 128. The hollow reverse clutch drum has a cylinder installed at one side of the inside thereof, the ring-shaped reverse piston is installed in the cylinder while being supported by a spring, and moved in the longitudinal direction of the input driving shaft 110 by hydraulic pressure when operation oil is supplied, the one or more ring-shaped friction plates 128 are coupled to the inner circumferential surface of the reverse clutch drum at the other side of the inside of the reverse clutch drum so as to be spaced from each other, the reverse coupling is coupled to the input driving shaft 110 and extended into the reverse clutch drum, and the one or more ring-shaped friction disks 128 are coupled to the outer circumferential surface of the reverse coupling, such that the friction plates 127 and the friction disks 128 are alternately arranged while both side surfaces thereof are maintained at a predetermined distance.

The power train system and the vehicle including the same according to the present embodiment are implemented as a positive system in which the friction plates 122 and 127 and the friction disks 123 and 128 are pressed against each other when operation oil is supplied. However, the present embodiment is not limited thereto. The power train system and the vehicle including the same according to the present embodiment can be implemented as a negative system in which the friction plates 122 and 127 and the friction disks 123 and 128 are pressed against each other at normal times, but separated from each other and fixed to the input driving shaft 110 when operation oil is supplied.

As such, the rotational power outputted from the axle input unit 100 by operation oil which is selectively supplied through the forward clutch part 121 or the reverse clutch part 126 may be transferred as a forward driving power or reverse driving power to the axle output unit 200, or the power of the axle input unit 100 may be controlled not to be outputted to the axle output unit 200, in order to maintain the neutral mode.

As illustrated in FIG. 4, the idler part 131 is disposed between the input driving shaft 110 and the axle shaft 220, and includes an idle gear 132 having an idler shaft 130 disposed in parallel to the input driving shaft 110 and the axle shaft 220.

As illustrated in FIGS. 4 and 5, one side of the outer circumferential surface of the idle gear 132 is engaged with any one of the forward drive gear 129 and the reverse drive gear 124, and the other side of the outer circumferential surface of the idle gear 132 is engaged with any one of the left and right differential transfer gears 217 and 216 installed in the left and right differential gear cases 211 and 212 described later, respectively.

The power train system and the vehicle including the same according to the present embodiment may have a structure in which one side of the idle gear 132 in the idler part 131 is engaged with the forward drive gear 129, and the other side of the idle gear 132 is engaged with the left differential transfer gear 217 of the left differential gear case 211. However, the one side of the idle gear 132 may be engaged with the reverse drive gear 124, and the other side of the idle gear 132 may be engaged with the right differential transfer gear 216 of the right differential gear case 212. At this time, the rotation direction of the rotational power inputted from the first transmission unit I may be reversed.

The idle gear 132 is engaged with only the forward drive gear 129 between the forward and reverse drive gears 129 and 124, such that an output driving power inputted to the axle output unit 200 is classified into a forward driving power transferred through the axle input unit 100-the idler unit 131-the axle output unit 220 and a reverse driving power transferred through the axle input unit 100-the axle output unit 200.

The forward driving power or the reverse driving power inputted from the axle input unit 100 is selectively transferred to the differential gear part 210 through the idle gear 132 of the idler part 131, and the differential gear part 210 outputs the driving power to rotate the left and right axle shafts 221 and 222 in the same direction.

In the power train system and the vehicle including the same according to the present embodiment, the second transmission unit II according to the example of FIG. 2 has a structure in which the forward/reverse clutch part 121 and 126 which may be directly coupled to the axle shaft 220 is disposed outside so as to be separated from the axle shaft 220, as illustrated in FIGS. 2 to 7. Thus, the second transmission unit II can simplify the entire structure of the axle shaft 220 including the differential gear part 210.

That is, as illustrated in FIGS. 8A to 8D, the axle input unit 100 can be fixed at a predetermined position in the circumferential direction of the axle shaft 220, while a connection angle formed by the axial centers of the input driving shaft 110 and the bevel gear rotating shaft of the bevel gear part is fixed.

More specifically, the axle input unit 100 can be fixed at a predetermined position in a semicircle range corresponding to a side where the axle input unit 100 is installed, based on an arbitrary vertical line passing through the axial center of the input driving shaft 110.

This may indicate that the axle input unit 100 can be fixed at a predetermined position in a semicircle range corresponding to the side where the axle input unit 100 is installed, based on an arbitrary vertical line passing through the axial centers of the left and right differential transfer gears 217 and 216.

Furthermore, while one side of the idler part is connected to the forward drive gear 129 of the forward clutch part 121 and the other side of the idler part is connected to any one of the left and right differential transfer gears 217 and 216, the reverse drive gear 124 of the reverse clutch part 126 in the axle input unit 100 can be engaged with a predetermined position in a semicircle range corresponding to the side where the axle input unit 100 is installed, based on an arbitrary vertical line passing through the axial center of the other of the left and right differential transfer gears 217 and 216.

At this time, one side of the idle gear of the idler part may be engaged with the forward drive gear 129, and the other side of the idle gear may be engaged with the left differential transfer gear 217.

More specifically, as illustrated in FIGS. 8A to 8D, the idler shaft 130 of the idler part 131 may be additionally installed as an intermediate shaft between the axle input unit 100 and the axle shaft 220. Thus, the vertical height of the rotating shaft of the bevel gear part with respect to the rotation center of the axle shaft 220 can be flexibly designed along the circumferential direction of the axle shaft 220.

In the related art, the rotating shaft of the bevel gear part and the rotating shaft of the beveling gear 101 (that is, the center axis of the axle shaft 220) have a limited degree of freedom in design due to the power transmission characteristic of the bevel gear 9. In the second transmission unit II according to the present embodiment, however, the beveling gear 101 engaged with the bevel gear 9 may be installed on the input driving shaft 110 of the axle input unit 100 separated from the axle shaft 220, such that the bevel gear 9 and the beveling gear 101 can be fixed at positions having the best gear engagement efficiency. Moreover, as long as the gear engagement efficiency is not degraded, the bevel gear part and the axle input unit 100 can be freely positioned along the circumferential direction of the axle output unit 200.

Therefore, the axle housing (not illustrated) can be designed to have a slim structure, and the degree of freedom in design for the external shape of the axle housing can be increased. Thus, the product can be designed to have a small size.

In the power train system and the vehicle including the same according to the present embodiment, speed change processes through the second transmission unit II during the neutral state, the forward driving mode and the reverse driving mode will be described in detail with reference to FIGS. 9A to 9C.

First, the neutral mode will be described.

During the neutral mode as illustrated in FIG. 9A, operation oil is not supplied to both of the forward and reverse clutch parts 121 and 126. Therefore, although a rotational power is inputted to the input driving shaft through the bevel gear 9 of the bevel gear part from the power generator 1 or the power converter, none of the forward clutch part 121 and the reverse clutch part 126 are operated because no hydraulic pressure is supplied to the forward/reverse clutch part 121 and 126. In this case, since the forward drive gear 129 and the reverse drive gear 124 are not rotated, power transmission is not performed. That is, the neutral mode is achieved.

Next, the forward driving mode will be described.

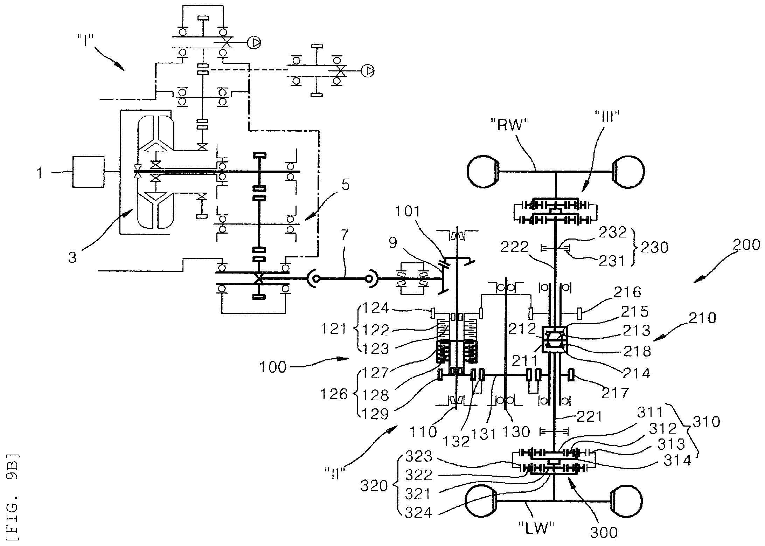

Referring to FIG. 9B, a power transfer process in which forward driving is achieved by the forward/reverse clutch part 121 and 126 will be described as follows. That is, a rotational power inputted to the forward/reverse clutch part 121 and 126 through the bevel gear 9 of the bevel gear part from the driving source may rotate the forward drive gear 129 while the forward clutch part 121 and the input driving shaft 110 are fixed to each other depending on whether operation oil is supplied. At this time, the idle gear 132 of the idler part 131 may be engaged and rotated with the forward drive gear 129, and rotate the left differential transfer gear 217. The rotation of the left differential transfer gear 217 may forward drive the left axle shaft 221 and the right axle shaft 222.

When the axle shaft 220 is forward driven, the axle shaft 220 is decelerated by the reduction gear part 300 including a double planetary gear set, and finally forward drives the left wheel LW and the right wheel RW.

Finally, the reverse driving mode will be described.

Referring to FIG. 9C, a power transfer process in which reverse driving is achieved by the forward/reverse clutch part 121 and 126 will be described as follows. That is, a rotational power inputted to the forward/reverse clutch part 121 and 126 through the bevel gear 9 of the bevel gear part from the driving source may rotate the reverse drive gear 124, while the reverse clutch part 126 and the input driving shaft 110 are fixed to each other depending on whether operation oil is supplied. At this time, the reverse drive gear 124 may be directly engaged with the right differential transfer gear 216 and rotate the right differential transfer gear 216, and the rotation of the right differential transfer gear 216 may reversely drive the right axle shaft 222 and the left axle shaft 221.

Similarly, when the axle shaft 220 is reversely driven, the axle shaft 220 is decelerated by the reduction gear part 300 including a double planetary gear set, and finally reversely drive the left wheel LW and the right wheel RW.

In the power train system and the vehicle including the same according to the present embodiment, the second transmission unit II may include the axle input unit 100 having the forward/reverse clutch part 121 and 126 such that the input driving shaft 110 is separated from the differential gear part 210 or the axle shaft 220 and disposed in parallel to the differential gear part 210 or the axle shaft 220, thereby increasing the degree of freedom in design.

According to the embodiments of the present disclosure, the power train system, the vehicle including the same and the control method thereof can accomplish the following effects.

First, since the connection portion to the bevel gear of the bevel gear part is flexibly set in the radial direction based on the axle shaft, the degree of freedom in design can be improved.

Second, a part of the components for the speed change function in the axle shaft can be installed on a separate shaft, which makes it possible to reduce the size of the product.

Third, since a part of the components for the speed change function can be separated from the axle shaft having a complex structure for the speed change function to the outside, precise gears may not be needed. Thus, the manufacturing cost of the product can be reduced.

Although the representative embodiments of the present disclosure have been disclosed in detail, those having ordinary skill in the field of technology to which the present disclosure pertains would understand that various modifications are possible, without departing from the scope of the present disclosure. Accordingly, the scope of the present disclosure should not be construed as being limited to the described embodiments but be defined by the appended claims as well as equivalents thereof.

## Claims

1. A power train system comprising:
an axle output unit comprising an axle shaft connected to wheels;
a bevel gear part forming a bevel gear rotating shaft installed in a longitudinal direction of a vehicle body so as to supply a power generated by a power generator to the axle output unit; and
an axle input unit comprising an input driving shaft which is separated from the axle shaft of the axle output unit, receives the power from the bevel gear part, and transfers the received power to the axle output unit,
wherein the axle input unit is fixed at a predetermined position in the circumferential direction of the axle shaft, while a connection angle formed by the axial centers of the input driving shaft and the bevel gear rotating shaft of the bevel gear part is fixed.

2. The power train system of claim 1, wherein the axle input unit comprises:
a beveling gear installed on the input driving shaft, and engaged with a bevel gear of the bevel gear part so as to receive the power; and
forward and reverse clutch parts installed on the outer circumference of the input driving shaft, and fixed to the input driving shaft depending on whether operation oil is supplied.

3. The power train system of claim 2, further comprising an idler part separated from the axle shaft, disposed in parallel to the input driving shaft, connected to any one of the forward and reverse clutch parts to switch a rotational power of the input driving shaft from one direction to the other direction, and transferring the switched rotational power to the axle output unit.

4. The power train system of claim 3, wherein the forward and reverse clutch parts comprise:
a reverse clutch part comprising a reverse drive gear directly connected to the axle output unit, and rotating the reverse drive gear when being connected to the input driving shaft; and
a forward clutch part comprising a forward drive gear indirectly connected to the axle output unit through the idler part, and rotating the forward drive gear and the idler part when being fixed to the input driving shaft.

5. The power train system of claim 4, wherein the idler part comprises:
an idler shaft installed in parallel to the axle shaft and the input driving shaft; and
an idle gear installed on the outer circumference of the idle shaft, and engaged with the forward drive gear of the forward clutch part.

6. The power train system of any one of claims 1 to 5, wherein the axle input unit is fixed at a predetermined position in a semicircle range corresponding to a side where the axle input unit is installed, based on an arbitrary vertical line passing through the axial center of the input driving shaft.

7. The power train system of any one of claims 1 to 5, wherein the axle shaft comprises a left axle shaft connected to a left wheel of the wheels and a right axle shaft connected to a right wheel of the wheels,
the axle output unit comprises left and right differential transfer gears disposed between the left and right axle shafts, and connected to the axle input unit so as to separately receive a forward driving power and a reverse driving power from the axle input unit, and
the axle input unit is fixed at a predetermined position in a semicircle range corresponding to a side where the axle input unit is installed, based on an arbitrary vertical line passing through the axial centers of the left and right differential transfer gears.

8. The power train system of claim 4 or 5, wherein the axle shaft comprises a left axle shaft connected to a left wheel of the wheels and a right axle shaft connected to a right wheel of the wheels,
the axle output unit comprises left and right differential transfer gears disposed between the left and right axle shafts, and connected to the axle input unit so as to selectively receive a forward driving power and a reverse driving power from the axle input unit, and
the reverse drive gear of the axle input unit is engaged with a predetermined position in a semicircle range corresponding to a side where the axle input unit is installed, based on an arbitrary vertical line passing through the axial center of any one of the left and right differential transfer gears, while one side of the idler part is connected to the forward drive gear and the other side of the idler part is connected to the other of the left and right differential transfer gears.

9. The power train system of claim 5, wherein the axle shaft comprises a left axle shaft connected to a left wheel of the wheels and a right axle shaft connected to a right wheel of the wheels,
the axle output unit comprises left and right differential transfer gears disposed between the left and right axle shafts, and connected to the axle input unit so as to separately receive a forward driving power and a reverse driving power from the axle input unit, and
the reverse drive gear of the axle input unit is engaged with a predetermined position in a semicircle range corresponding to a side where the axle input unit is installed, based on an arbitrary vertical line passing through the axial center of any one of the left and right differential transfer gears, while one side of the idle gear is engaged with the forward drive gear and the other side of the idle gear is engaged with the other of the left and right differential transfer gears.

10. A vehicle including a power train system comprising:
an axle output unit comprising an axle shaft connected to wheels;
a bevel gear part forming a bevel gear rotating shaft installed in a longitudinal direction of a vehicle body so as to supply a power generated by a power generator to the axle output unit; and
an axle input unit comprising an input driving shaft which is separated from the axle shaft of the axle output unit, receives the power from the bevel gear part, and transfers the received power to the axle output unit,
wherein the axle input unit is fixed at a predetermined position in the circumferential direction of the axle shaft, while a connection angle formed by the axial centers of the input driving shaft and the bevel gear rotating shaft of the bevel gear part is fixed.
